# EUROPÄISCHE PATENTSCHRIFT

(11) **EP 0 612 944 B1**
(45) Veröffentlichungstag und Bekanntmachung des Hinweises auf die Patenterteilung: **13.11.1996**
(21) Anmeldenummer: 93120753.4
(22) Anmeldetag: 22.12.1993
(51) Int. Cl.: F16L 3/13, F16L 55/033

(54) **Einteiliges Halteelement**
One-piece support element
Elément de fixation monobloc

(30) Priorität: 28.01.1993 DE 4302408
(43) Veröffentlichungstag der Anmeldung: 31.08.1994
(73) Patentinhaber: TRW United-Carr GmbH & Co. KG, D-67677 Enkenbach-Alsenborn (DE)
(72) Erfinder: Rückwardt, Hans-Werner, D-67307 Göllheim/Pfalz (DE)
(74) Vertreter: Schieschke, Klaus, Dipl.-Ing.

(56) Entgegenhaltungen:
- EP-A- 0 483 636
- EP-A- 0 490 157
- DE-U- 9 011 879
- GB-A- 2 166 794

## Beschreibung

Die Erfindung bezieht sich auf ein einteiliges Halteelement aus Kunststoff, insbesondere für mindestens eine Rohrleitung, mit mindestens einem Lagerbereich und mindestens einem Haltebereich zum teilweisen Umfassen des Rohrleitungsumfanges, wobei der Lagerbereich zwischen zwei Haltebereichen über Federnde Stege angeordnet ist und die beiden Haltebereiche zu einem Grundkörper verbunden sind.

Als Stand der Technik ist bereits ein derartiges Halteelement bekannt (DE-PS 30 02 031), welches insbesondere zur Halterung von Benzinleitungen in einem Kraftfahrzeug dient. Hierbei besteht der Haltebereich aus zwei schalenförmigen Halterungen in Form einer, den Rohrleitungsumfang teilweise umfassenden Innenschale und einer die Innenschale mit Abstand umgebenden Außenschale. Der Lagerbereich ist zwischen zwei Haltebereichen angeoranet und weist eine durchgehende Öffnung auf, welche über ein Einschubende auf einem an einem Kraftfahrzeug angeordneten Profilbolzen befestigt ist.

Weitere bekannte einteilige Halteelemente (GB-2 098 699 A, GB-PS 1 379 543, DE-OS 28 16 181) sind ähnlich aufgebaut; es besteht jeweils eine unmittelbare Verbindung zwischen dem Lagerbereich und einem einzelnen bzw. mehreren Haltebereichen zur Halterung von rohrförmigen Elementen.

Aus diesen bekannten Konstruktionen resultiert der Nachteil, daß Geräuschbildungen und/oder Schwingungen vom Lagerbereich auf die Haltebereiche bzw. umgekehrt übertragen werden können; hierdurch kann sich neben einer Minderung der Lebensdauer auch eine Reduzierung des Fahrkomforts infolge unerwünschter Geräusche ergeben.

Den gegenüber liegt der vorliegenden Erfindung die Aufgabe zugrunde, ein einteiliges Halteelement der eingangs genannten Art zu schaffen, welches bei einfachem Aufbau die vorgenannten Nachteile vermeidet und Schwingungen reduziert sowie Geräuschsübertragung weitgehend verringert.

Diese Aufgabe wird erfindungsgemäß durch die Merkmale des Anspruchs 1 gelöst. Hierdurch wird vorteilhafterweise eine weitgehende gezielte Trennung zwischen dem Lagerbereich und dem Haltebereich herbeigeführt, so daß unerwünschte Schwingungen sowie Geräusche nicht zwischen den beiden Teilen des Halteelements übertragen werden können.

Die Trennung zwischen Lagerbereich und Haltebereichen andererseits zählt bereits zum bekannten Stand der Technik (DE 40 34 545 A1, DE 40 43 546 A1). Diese bekannten Konstruktionen offenbaren jedoch Halteelemente, welche jeweils entweder zweiteilig oder dreiteilig ausgebildet sind, so daß hieraus sowohl Unterschiede in der Herstellung, im Kosten- und Materialaufwand, als auch im Aufbau resultieren.

Bei einer in der GB-A-2 166 794 offenbarten einteiligen Konstruktion sind die Haltebereiche dagegen über federnde Stege mit einem den Lagerbereich beinhaltenden Körper verbunden, was sich nachteilig auf die Robustheit bzw. Haltbarkeit der Konstruktion gegenüber Dauerbelastungen auswirkt und nicht geräuschmindernd ist. Bei einer anderen aus der DE-U-90 11 879 bekannten Konstruktion bilden die Haltebereiche einen Körper, der über mäanderförmige, lange Stege mit dem davon entfernt liegenden Lagerbereich verbunden ist, um eine weiche Federung zu erreichen. Diese Konstruktion erfordert aber nachteiligerweise eine raumaufwendige, hohe Bauform. Beide Konstruktionen unterscheiden sich so wesentlich von der Erfindung.

In weiterer Ausbildung der Erfindung kann der Lagerbereich zwischen zwei Haltebereichen angeordnet sein, wobei die beiden Haltebereiche zu einem Grundkörper verbunden sind und der Grundkörper mit den zylinderförmig ausgebildeten Lagerbereich über mehrere federnde Stege verbunden ist. Vorzugsweise können über den Umfang verteilt drei federnde Stege den Grundkörper mit dem Lagerbereich verbinden.

Um den Weg zwischen dem Lagerbereich und den Haltebereichen möglichst lang zu erhalten, können sich die Stege diagonal durch einen Zwischenraum zwischen dem Grundkörper und den Lagerbereichen erstrecken. Bei einem einseitig offenen Lagerbereich können sich die Stege in dieser Konfiguration vom offenen Ende des Lagerbereichs durch den Zwischenraum zur diagonal gegenüberliegenden Seite des Grundkörpers erstrecken.

Bei einer Ausgestaltung des Halteelements, bei welchem jeder Haltebereich aus zwei schalenförmigen Halterungen mit einer den Rohrleitungsumfang teilweise umfassenden Innenschale und einer die Innenschale mit Abstand umgebenden Außenschale besteht, kann jeder Haltebereich innenseitig eine durch eine Wand begrenzte Aussparung aufweisen, wobei beide Wände über Verbindungsbereiche miteinander verbunden sind und einen Zwischenraum umschließen, in dessen Innerem der Lagerbereich angeordnet ist. Dieser Lagerbereich kann innenseitig über den Umfang verteilte Längsrippen aufweisen.

Weiterhin besteht die Möglichkeit, daß die Stege nicht geradlinig verlaufen, sondern beispielsweise Wellenform aufweisen, so daß hierdurch vorteilhafterweise eine weitere Reduzierung unerwünschter Schwingungen und Geräuschsübertragung bewirkt wird.

Die Erfindung wird nachfolgend anhand eines in der Zeichnung dargestellten Ausführungsbeispiels näher beschrieben.

In der Zeichnung zeigen:
- Fig. 1: eine Seitenansicht eines Halteelements mit einem Lagerbereich und beidseitig davon angeordneten Haltebereichen;
- Fig. 2: eine Vorderansicht des Halteelements nach Fig. 1;
- Fig. 3: eine Unteransicht des Halteelements nach Fig. 1;
- Fig. 4: einen Schnitt gemäß der Linie IV-IV in Fig. 3;
- Fig. 5 bis 7: verschiedene Ausgestaltungen des Lagerbereichs des Halteelements.

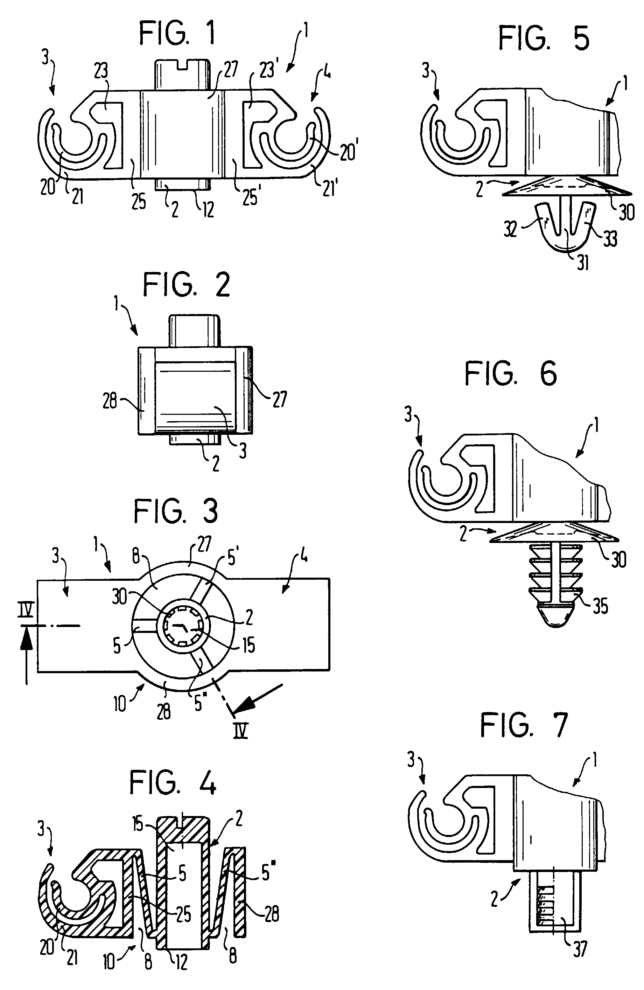

In Fig. 1 ist ein einteiliges, aus Kunststoff bestehendes Halteelement 1 dargestellt. Dieses besteht im wesentlichen aus einem Lagerbereich 2, welcher zwischen zwei Haltebereichen 3 und 4 angeordnet ist. Jeder dieser Haltebereiche 3 und 4 dient z. B. zur Halterung einer nicht näher dargestellten Rohrleitung: Hierzu besteht jeder Haltebereich 3, 4 aus zwei schalenförmigen Halterungen mit einer den Rohrleitungsumfang teilweise umfassenden Innenschale 20 bzw. 20' und einer die Innenschale mit Abstand umgebenden Außenschale 21 bzw. 21'. Die beiden Haltebereiche 3 und 4 sind nach Fig. 3 über zwei Verbindungsbereiche 27 und 28 zu einem Grundkörper 10 verbunden.

Aus Fig. 3 geht weiterhin hervor, daß die Verbindungsbereiche 27 und 28 sowie die Innenseiten der Haltebereiche 3 und 4 einen Zwischenraum 8 umschließen, in dessen Innerem der Lagerbereich 2 angeordnet ist. Dieser Lagerbereich 2 ist z.B. zylinderförmig ausgebildet und über drei über den Umfang verteilte federnde Stege 5, 5', 5'' mit dem Grundkörper 10 verbunden.

Der Lagerbereich 2 des Halteelements weist nach Fig. 4 eine Öffnung 15 mit einem offenen Ende 12 auf. Wie aus Fig. 4 gleichfalls ersichtlich, erstrecken sich die Stege 5, 5' und 5'' vom offenen Ende 12 dieses Lagerbereichs 2 durch den Zwischenraum 8 zur diagonal gegenüberliegenden Seite des Grundkörpers 10. Damit ist ein langer Weg geschaffen, so daß unerwünschte Schwingungen vermieden und Geräuschdämpfung erzielt wird.

Aus Fig. 1 und 4 geht hervor, daß jeder Haltebereich 3, 4 innenseitig eine durch eine Wand 25 bzw. 25' begrenzte Aussparung 23 bzw. 23' aufweist. Diese Wände gehen in die Verbindungsbereiche 27 und 28 über und stellen einen Teil des Grundkörpers 10 dar.

Nach Fig. 3 besitzt der Lagerbereich 2 innenseitig über den Umfang der Öffnung 15 verteilte Längsrippen 30. Diese Längsrippen 30 können sich in einen nicht näher dargestellten Profilbolzen einlagern, welcher seinerseits beispielsweise an der Karosserie eines Kraftfahrzeuges befestigt ist.

Werden nun in die Innenschale 20 bzw. 20' Rohrleitungen eingedrückt, so daß diese in dem erfindungsgemäßen Halteelement lagern, so ist durch die weitgehende Trennung zwischen Lagerbereich reich 2 einerseits und den Haltebereichen 3, 4 andererseits gewährleistet, daß unerwünschte Schwingungen bzw. Geräusche nicht mehr in erheblichem Maße zwischen diesen beiden Bereichen des Halteelements übertragen werden. Lediglich die drei über den Umfang verteilten Stege 5, 5' und 5'' stellen die Verbindung zwischen dem Lagerbereich 2 und dem Haltebereich 3 und 4 her, wobei diese Stege so gestaltet sind, daß möglichst lange Wege vorliegen.

Statt der geraden Ausführung der Stege nach Fig. 4 besteht auch die Möglichkeit, diese beispielsweise gewellt auszubilden, so daß eine weitere positive Wegverlängerung erzielt wird.

Während bei der Ausführungsform des Halteelements 1 nach Fig. 1 bis Fig. 4 der Lagerbereich 2 als Öffnung 15 mit Längsrippen 30 ausgebildet ist, zeigen die Fig. 5 bis Fig. 7 weitere Gestaltungsmöglichkeiten: Nach Fig. 5 kann der Lagerbereich 2 aus einem Fuß 31 mit zwei einander gegenüberliegenden elastischen Flügeln 32 und 33 bestehen, oberhalb welchen eine elastische, umlaufende Dichtlippe 30 angeordnet ist.

Zwischen der Unterseite dieser Dichtlippe 30 und der oberen jeweiligen Kante der elastischen Flügel 32 und 33 kann sich damit ein Träger mit einer entsprechend gestalteten Öffnung einlagern, wodurch das Halteelement 1 an diesem funktionssicher befestigt ist.

Die Bauform nach Fig. 6 besteht aus einem Bolzenteil 35 mit einzelnen konischen Elementen und einer elastischen umlaufenden Dichtlippe 30, wodurch eine Einlagerungsmöglichkeit in eine nicht näher dargestellte Öffnung eines Trägers mit Abdichtung gegeben ist.

Bei beiden vorgenannten Ausführungsformen nach Fig. 5 und Fig. 6 kann die Dichtlippe 30 auch entfallen.

Bei der Bauform nach Fig. 7 findet ein speziell gestaltetes Halteteil 37 Anwendung, bei welchem vorn hintereinander angeordnete Rippen vorgesehen sind; diese können sich in einem nicht näher dargestellten, an einem Träger befestigten Profilbolzen einlagern.

In jedem Fall liegt ein einteiliges Halteelement aus Kunststoff vor, welches eine gezielte weitgehende Trennung zwischen den Haltebereichen 3 und 4 und dem Lagerbereich 2 schafft. Hierbei ist es unwesentlich, wie der Lagerbereich und der Haltebereich ausgestaltet sind; statt der Halbschalen des Haltebereichs kann dieser konstruktiv auch anders ausgebildet sein und andere Elemente anstelle von Rohrleitungen haltern.

## Patentansprüche

1. Einteiliges Halteelement (1) aus Kunststoff, insbesondere für mindestens eine Rohrleitung, mit mindestens einem Lagerbereich (2) und mindestens einem Haltebereich (3,4) zum teilweisen Umfassen des Rohrleitungsumfangs, wobei der Lagerbereich (2) zwischen zwei Haltebereichen über federnde Stege angeordnet ist und die beiden Haltebereiche (3, 4) zu einem Grundkörper (10) verbunden sind,
dadurch gekennzeichnet,
daß der Grundkörper (10) einen Zwischenraum (8) umschließt, in dessen Innerem der Lagerbereich (2) angeordnet und über mindestens einen federnden Steg (5,5',5") mit dem Grundkörper (10) verbunden ist.

2. Halteelement nach Anspruch 1,
dadurch gekennzeichnet,
daß der Lagerbereich (2) zylinderförmig ausgebildet ist.

3. Halteelement nach einem der Ansprüch 1 oder 2,
dadurch gekennzeichnet,
daß über den Umfang verteilt drei federnde Stege (5, 5', 5") den Grundkörper (10) mit dem Lagerbereich (2) verbinden.

4. Halteelement nach einem der vorhergehenden Ansprüche,
dadurch gekennzeichnet,
daß sich die Stege (5, 5', 5") diagonal durch den Zwischenraum (8) zwischen dem Grundkörper (10) und dem Lagerbereich (2) erstrecken.

5. Halteelement nach Anspruch 4,
mit einem einseitig offenen Lagerbereich,
dadurch gekennzeichnet,
daß sich die Stege (5, 5', 5'') von einem Ende (12) des Lagerbereichs (2) durch den Zwischenraum (8) zur diagonal gegenüberliegenden Seite des Grundkörpers (10) erstrecken.

6. Halteelement nach einem der vorhergehenden Ansprüche,
wobei jeder Haltebereich aus zwei schalenförmigen Halterungen mit einer den Rohrleitungsumfang teilweise umfassenden Innenschale und einer die Innenschale mit Abstand umgebenden Außenschale besteht,
dadurch gekennzeichnet,
daß jeder Haltebereich (3, 4) innenseitig eine durch eine Wand (25, 25') begrenzte Aussparung (23, 23') aufweist und
daß beide Wände (25, 25') über Verbindungsbereiche (27, 28) miteinander verbunden sind und den Zwischenraum (8) umschließen, in dessen Innerem der Lagerbereich (2) angeordnet ist.

7. Halteelement nach einem der vorhergehenden Ansprüche,
dadurch gekennzeichnet,
daß der Lagerbereich (2) innenseitig über den Umfang verteilte Längsrippen aufweist, aus einem Profilbolzen (35) besteht oder elastische Flügel (32, 33) aufweist.

## Claims

1. One-piece holding element (1), made of plastic, in particular for at least one pipe, having at least one supporting region (2) and at least one holding region (3, 4) for partially surrounding the pipe circumference, the supporting region (2) being arranged between two holding regions via resilient webs, and the two holding regions (3, 4) being connected to form a basic body (10), characterized in that the basic body (10) encloses a gap (8) inside which the supporting region (2) is arranged and is connected to the basic body (10) via at least one resilient web (5, 5', 5").

2. Holding element according to Claim 1, characterized in that the supporting region (2) is of cylindrical configuration.

3. Holding element according to either of Claims 1 or 2, characterized in that three resilient webs (5, 5', 5"), distributed over the circumference, connect the basic body (10) to the supporting region (2).

4. Holding element according to one of the preceding claims, characterized in that the webs (5, 5', 5") extend diagonally through the gap (8) between the basic body (10) and the supporting region (2).

5. Holding element according to Claim 4, having a supporting region which is open on one side, characterized in that the webs (5, 5', 5") extend from one end (12) of the supporting region (2) through the gap (8) to the diagonally opposite side of the basic body (10).

6. Holding element according to one of the preceding claims, each holding region comprising two shell-like holders with an inner shell partially surrounding the pipe circumference and an outer shell surrounding the inner shell with a clearance, characterized in that each holding region (3, 4) has on the inside a cut-out (23, 23') bounded by a wall (25, 25'), and in that the two walls (25, 25') are connected to one another via connecting regions (27, 28) and enclose the gap (8) inside which the supporting region (2) is arranged.

7. Holding element according to one of the preceding claims, characterized in that the supporting region (2) has, on the inside, longitudinal ribs distributed over the circumference, consists of a profiled bolt (35) or has elastic wings (32, 33).

## Revendications

1. Elément monobloc de retenue (1) en matière plastique, en particulier pour au moins un conduit tubulaire, comprenant au moins une zone de portée (2) et au moins une zone de retenue (3, 4) pour emprisonner partiellement le pourtour du conduit tubulaire, la zone de portée (2) étant disposée entre deux zones de retenue, par l'intermédiaire de membrures élastiques, et les deux zones de retenue (3, 4) étant reliées en un corps de base (10),
caractérisé par le fait
que le corps de base (10) ceinture un espace intercalaire (8), à l'intérieur duquel la zone de portée (2) est ménagée et est reliée audit corps de base (10) par l'intermédiaire d'au moins une membrure élastique (5, 5', 5'').

2. Elément de retenue selon la revendication 1,
caractérisé par le fait
que la zone de portée (2) est de réalisation cylindrique.

3. Elément de retenue selon l'une des revendications 1 ou 2,
caractérisé par le fait
que trois membrures élastiques (5, 5', 5''), réparties sur le pourtour, relient le corps de base (10) à la zone de portée (2).

4. Elément de retenue selon l'une des revendications précédentes,
caractérisé par le fait
que les membrures (5, 5', 5'') s'étendent diagonalement à travers l'espace intercalaire (8) situé entre le corps de base (10) et la zone de portée (2).

5. Elément de retenue selon la revendication 4, présentant une zone de portée ouverte d'un côté,
caractérisé par le fait
que les membrures (5, 5', 5'') traversent l'espace intercalaire (8) à partir d'une extrémité (12) de la zone de portée (2), vers le côté diagonalement opposé du corps de base (10).

6. Elément de retenue selon l'une des revendications précédentes,
dans lequel chaque zone de retenue se compose de deux supports en forme de coquilles, avec une coquille intérieure emprisonnant partiellement le pourtour du conduit tubulaire, et une coquille extérieure entourant à distance la coquille intérieure,
caractérisé par le fait
que chaque zone de retenue (3, 4) présente, intérieurement, une échancrure (23, 23') délimitée par une paroi (25, 25') ; et
que les deux parois (25, 25') sont reliées l'une à l'autre par l'intermédiaire de zones de solidarisation (27, 28), et ceinturent l'espace intercalaire (8) à l'intérieur duquel la zone de portée (2) est disposée.

7. Elément de retenue selon l'une des revendications précédentes,
caractérisé par le fait
que la zone de portée (2) présente des nervures longitudinales réparties intérieurement sur le pourtour, est constituée d'un tenon profilé (35) ou comporte des ailettes élastiques (32, 33).
